# FASCICULE DE BREVET EUROPEEN

(11) **EP 0 929 488 B1**
(45) Date de publication et mention de la délivrance du brevet: **27.06.2001**
(21) Numéro de dépôt: 97919445.3
(22) Date de dépôt: 28.03.1997
(51) Int. Cl.: B65G 61/00, B65G 57/22

(54) **DISPOSITIF DE PALETTISATION DE CARTOUCHES DE CAHIERS EMPILES**
EINRICHTUNG ZUM PALETTIEREN VON GEBÜNDELTEN PAPIERSTAPELN
DEVICE FOR PALLETISING STACKED QUIRE BUNDLES

(30) Priorité: 01.04.1996 FR 9604060
(43) Date de publication de la demande: 21.07.1999
(73) Titulaire: Realisations, Etudes & Commercialisation de Matériel Pour l'Industrie, S.A:, 72400 La Ferte-Bernard (FR)
(72) Inventeur: BODEREAU, Jean-Pierre, F-72400 La Ferté-Bernard (FR); BODEREAU, Gilles, F-72400 La Ferté-Bernard (FR); VERNON, Laurent, F-72400 La Ferté-Bernard (FR)
(74) Mandataire: Dawidowicz, Armand
(86) Numéro de dépôt international: FR9700570
(87) Numéro de publication internationale: WO9736808

(56) Documents cités:
- EP-A- 0 146 643
- EP-A- 0 698 553
- WO-A-86/07579
- FR-A- 2 588 844
- GB-A- 821 259
- US-A- 4 214 848

## Description

L'invention concerne un dispositif de palettisation de cartouches de cahiers empilés.

Afin de transporter facilement des cahiers imprimés, ceux-ci sont empilés sous forme d'une cartouche qui est cerclée. Il convient ensuite de transporter ladite cartouche cerclée jusqu'à une station de palettisation.

La plupart des systèmes de palettisation font appel à des dispositifs comportant des systèmes de préhension mécanique de la cartouche, par exemple par serrage de ladite cartouche entre des pinces, ou par aspiration.

Ainsi, on peut utiliser un palettiseur à préhenseur mobile pneumatique ou hydraulique, du type comportant une paire de mâchoires de serrage permettant de soulever et de palettiser des cartouches de cahiers empilés comme cela est décrit en particulier dans la demande WO 91/16259.

Cependant, on a pu remarquer que ce type de système n'est pas satisfaisant dans le cas de la palettisation de cartouches de cahiers empilés, en particulier lorsque ceux-ci présentent une sur-épaisseur ou une sous-épaisseur locale, par exemple dans le cas de la présence d'onglets ou de feuillets additionnels. En effet, la présence de cette sur-épaisseur ou sous-épaisseur provoque, dans le cas d'une compression de la cartouche lors de la prise de celle-ci entre les mâchoires de serrage d'une pince de préhension, la création de glissements entre les cahiers, ce qui conduit à une désorganisation de la cartouche et même parfois à une destruction de celle-ci.

On connaît également des palettiseurs à plateau permettant de palettiser des poignées de cahiers par couches entières, ne représentant que de faibles charges, sur des empileurs à poignées. Ce type de dispositif ne peut cependant pas être utilisé pour des cartouches qui représentent des charges bien trop lourdes.

On connaît aussi des palettiseurs à plateau permettant d'amener les cartouches jusqu'au point d'empilement par lit entier de cartouches. En général, ces dispositifs comprennent des moyens propres à permettre les changements de direction de l'objet à empiler pour le conduire vers la palette. Ce type de dispositif ne présente pas une précision suffisante en ce qui concerne l'empilement. En outre, les moyens de poussée permettant les changements de direction peuvent également conduire à une désorganisation de la cartouche.

Ainsi, le document FR-A-2 588 844 décrit un palettiseur comportant un poste d'entrée constitué d'un tapis roulant sur lequel les articles à empiler sont amenés et une nacelle permettant le transport d'une rangée d'articles à empiler vers la palette. Le dispositif est réalisé de telle sorte qu'il est nécessaire d'imprimer une poussée transversale aux articles arrivant sur le poste d'entrée pour les transférer sur la nacelle. Là encore, dans le cas de la palettisation de cartouches de cahiers empilés, celles-ci sont soumises à une contrainte de poussée pouvant conduire à une désorganisation de ladite cartouche si le poussoir n'est pas dimensionné correctement. Ce type de dispositif, comparable également à celui décrit dans FR-A-2.683.805, n'est pas pratique dans la mesure où il ne peut être utilisé que pour des cartouches de dimensions compatibles avec le poussoir. En outre, ce type de dispositif apparaît utilisable pour des charges individuelles de 2 à 30 kg, ce qui est insuffisant dans le cadre d'une utilisation pour palletiser des cartouches de cahiers empilés qui présentent le plus souvent un poids largement supérieur à 30 kg.

On connaît également par EP-A-0 506 630 un palettiseur comprenant des moyens de transport roulant ainsi que des moyens de poussée permettant la mise en place de l'objet à empiler vers la palette, constitués par une fourche qui saisit ledit objet et qui peut ensuite être effacée du dessous de l'objet lorsqu'il est déposé. Dans le cas de la palettisation d'une cartouche de cahiers empilés, l'utilisation d'un tel dispositif se révèle difficile. En effet, l'action des bras en saillie constituant la fourche risque d'entraîner des déformations au sein de l'empilement de cahiers, ceux-ci pouvant être déchirés ou poussés hors de la cartouche sous l'action de la fourche.

On connaît encore, par EP-A-0 097 308, un palettiseur pour cartouches de cahiers empilés. Ce palettiseur comporte un poste d'amenée de la cartouche vers un poste de préhension de ladite cartouche pour l'amener vers un poste d'empilement. Le poste d'amenée est réalisé basculant de telle sorte qu'une cartouche, mise en place dessus, est basculée afin d'être positionnée sur un plan mobile du poste de préhension de la cartouche, celui-ci étant vertical au moment de l'accueil de la cartouche. Ledit poste de préhension bascule également ensuite afin d'amener ladite cartouche depuis le plan vertical vers un plan horizontal où une butée-poussoir se déplace. Ladite butée-poussoir entraîne en déplacement, le long du plan horizontal, la cartouche afin de l'amener au-dessus d'un empilement de cartouches déjà empilées, la palette ou les cartouches empilées reposant sur un plateau pouvant être abaissé de telle sorte que son niveau supérieur correspond au plan horizontal où se déplace la butée-poussoir de manière à recevoir une nouvelle cartouche.

Ce type de dispositif comporte également l'inconvénient de soumettre la cartouche à une contrainte de poussée, en particulier lors de l'entraînement de la cartouche par la butée-poussoir qui peut amener à une désorganisation de la cartouche.

On connaît par GB-A-821 253 d'un élévateur présentant une plate-forme constituée de rouleaux pour la réception d'une couche de paquets à déposer sur une palette.

L'élévateur est positionné à l'extrémité d'un tapis d'amenée et reçoit sur sa plate-forme un ensemble de paquets en couche, ladite plate-forme étant inclinée de manière à favoriser l'amenée desdits paquets et présente un élément de butée contre lequel vient en butée le premier paquet de la couche.

Puis l'élévateur amène, par translation verticale, les paquets depuis le tapis d'amenée positionné en hauteur jusqu'à une palette ou à la couche supérieure d'un empilement de paquets sur la palette et les rouleaux de la plate-forme sont alors entraînés pour s'effacer et libérer la couche de paquets.

Afin de déposer correctement la couche de paquets, le dispositif comporte un élément de pression pour aider à la décharge des paquets. Ce dispositif comporte donc des éléments de butée et de pression propres à assurer une pression et une poussée sur la couche de paquets de manière à assurer une bonne réception de la couche de paquets sur la plate-forme d'un élévateur et une bonne évacuation de ladite couche de paquets vers la palette. Un tel dispositif est donc inapproprié dans le cas du traitement de cartouches de cahiers qui ne doivent pas subir de contraintes.

Par EP-A-0 698 553, on connaît une machine de remplissage automatique de fruits dans laquelle un plateau de réception de fruits est positionné en sortie d'une station d'amenée en hauteur où il reçoit une couche de fruits et est amené ensuite par translation verticale au-dessus d'un conteneur à l'aide d'un élévateur, le plateau s'effaçant alors du dessous de la couche de fruits pour libérer la couche de fruits.

Par US-A-4 214 848, on connaît un dispositif pour mettre en couche empilée un ou plusieurs paquets, ces paquets étant assemblés sous forme d'une couche sur un dispositif de transport où un plan de réception constitué de plusieurs plaques de transport soulève la couche de paquets et l'entraîne vers une station de transport plus élevée où elle est déposée. Les plaques de transport vont alors chercher une nouvelle couche de paquets et lorsqu'ils arrivent à la station de transport, ils poussent la couche de paquet préalablement posés sur une palette où la couche supérieure d'un empilement de manière à libérer de la place pour la nouvelle couche. Il est donc prévu dans ce dispositif d'exercer sur la couche de paquets à empiler une pression par l'intermédiaire d'éléments de poussée prévus sur les plaques de transport, lesdits éléments de poussée amenant la couche à son positionnement sur la palette.

Ainsi, dans ce dispositif on empile des couches de paquets et on exerce en outre au cours de l'empilement des pressions sur les objets à empiler. De plus, le dispositif de réception de la couche dépose celle-ci sur une station de transport et non directement sur une palette ou sur un empilement.

Par WO-A-8607579, on connaît un dispositif de chargement de paquets comportant un grapin pour prendre et déposer des paquets comportant des lames horizontales agencées pour s'engager sous un paquet pour le prendre et s'effacer de dessous le paquet pour le déposer, lesdites lames étant entourées d'un manchon protecteur pour éviter les frottements avec le paquet lors des mouvements d'engagement et d'effacement des lames sous un paquet. Un dispositif de pressage hydraulique ou électromécanique est déplacé verticalement pour venir s'appliquer sur la face supérieure du paquet transporté de manière à stabiliser celui-ci et à informer le dispositif de commande de la hauteur du paquet. Au cours du transport, le paquet subit une pression à la fois de la part des lames sur lesquelles il repose et du dispositif de pressage qui le stabilise sur sa face du dessus. Une cartouche de cahiers imprimés transportée par un tel dispositif subit des contraintes et, en outre, risque d'être détruite si elle ne repose que sur deux lames.

Au vu de l'ensemble de ces dispositifs, il convient donc de proposer un dispositif de palettisation permettant d'éviter les risques de déformation ou de désorganisation d'une cartouche de cahiers empilés au cours de la palettisation, en particulier en supprimant toutes contraintes de poussée de la cartouche ou de compression au sein de ladite cartouche.

A cet effet, l'invention concerne un dispositif de palettisation de cartouches de cahiers empilés selon la revendication 1.

Le dispositif selon l'invention permet ainsi de transporter et de déposer une cartouche sans exercice de pression ou contrainte physique sur la cartouche transportée.

La nacelle comporte deux parois latérales de forme sensiblement triangulaire entres lesquelles s'étend le plan de réception horizontal, ladite nacelle présentant une face arrière et une face avant par laquelle s'engage une cartouche en sortie du plateau de transport de la station d'amenée. De ce fait, il est nécessaire que ledit plan de réception permette le glissement de ladite cartouche qui avance sous l'effet du déplacement imposé par le plateau de transport de la station d'amenée.

En outre, ledit plateau de réception doit être réalisé tel qu'il puisse être effacé du dessous de la cartouche qu'il porte. A cet effet, la nacelle comporte des moyens propres à entraîner ledit plateau en translation le long de ses parois latérales, de préférence vers la face arrière de ladite nacelle, de telle sorte qu'il s'efface du dessous de la cartouche afin de permettre son dépôt.

Avantageusement, le plan de réception est alors constitué par une plage de rouleaux adjacents et libres en rotation autour de leur axe longitudinal, lesdits rouleaux étant disposés entre des parois latérales de la nacelle, de celle sorte que leur axe longitudinal est perpendiculaire à la direction d'amenée de la cartouche sur ledit plan de réception. La nacelle comprend des moyens d'entraînement en translation desdits rouleaux permettant l'effacement dudit plan de réception.

Ainsi, ledit dispositif de palettisation permet de prendre la cartouche depuis une station d'amenée constituée, par exemple, par l'extrémite, d'un plateau de transport constitué par un tapis roulant, la préhension de la cartouche par la nacelle se faisant par simple glissement de ladite cartouche sur les rouleaux constituant le plan de réception de la nacelle, la cartouche, soumise à l'effet de l'avancée du tapis roulant, glissant sur les rouleaux libres en rotation autour de leur axe longitudinal.

Ainsi, aucune compression n'est exercée sur la cartouche de cahiers empilés au moment de sa préhension.

La nacelle, portant la cartouche, est ensuite emmenée jusqu'au point d'empilement où la cartouche doit être déposée. Une fois correctement positionnée par rapport à l'empilement, les moyens d'entraînement en translation des rouleaux de la nacelle sont actionnés, de telle sorte que lesdits rouleaux s'effacent du dessous de la cartouche libérant celle-ci qui repose alors sur la palette ou sur les précédentes cartouches déjà empilées.

Par conséquent, au cours de la palettisation, il n'y a donc plus une seule compression ou contrainte physique exercée sur ou au sein de la cartouche. On ne prend donc plus du tout de risque quant à une déformation ou une destruction éventuelle de la cartouche.

En outre, le dispositif de l'invention permet de palettiser aisément des cartouches de cahiers empilés d'un poids élevé, en particulier largement supérieur à 30 kg.

Avantageusement, au cours du dépôt de la cartouche sur la palette, le positionnement de la nacelle de transport par rapport à la palette peut être réalisé de maniéré très précise, ce qui permet ensuite un dépôt précis de la cartouche.

De manière avantageuse, la nacelle est liée à des moyens de transport permettant le déplacement en translation verticale et horizontale de ladite nacelle depuis la station d'amenée jusqu'à la palette et inversement par tous moyens de transport connus en soi.

De préférence, l'utilisation de la nacelle est réglée par une commande numérique, ce qui permet d'effectuer la préhension, le transport et le dépôt d'une cartouche à la fois précisément et de manière répétitive.

On décrira maintenant plus en détail un exemple de réalisation de l'invention en référence au dessin annexé dans lequel :
la figure 1 représente schématiquement le dispositif de palettisation de l'invention au moment de l'amenée de la cartouche ;
la figure 2 représente le dispositif de la figure 1 lorsque la cartouche est amenée à l'empilament et
la figure 3 représente le dispositif de la figure 1 au moment du dépôt de la cartouche.

Le dispositif de palettisation selon l'invention présente une nacelle 1 de préhension, transport et dépôt d'une cartouche C. Cette nacelle 1 comporte des parois latérales 2 sensiblement triangulaires entre lesquelles s'étendent des rouleaux 3, libres en rotation autour de leur axe longitudinal et disposés adjacents de manière à former le plan de réception de la nacelle 1 sur lequel peut reposer une cartouche C. Les rouleaux 3 sont disposés de telle sorte que leur axe longitudinal est perpendiculaire à la direction d'amenée de la cartouche C sur le plan de réception.

Ainsi, lorsque la nacelle 1 est amenée dans le prolongement d'une station d'amenée 4 de la cartouche C, qui peut être constituée par l'extrémité d'un tapis roulant 5, la cartouche C atteignant ladite extrémité du tapis 5 peut s'engager sur le plan de réception de la nacelle 1 entre ses parois latérales 2 dans la mesure où les rouleaux 3, étant libres en rotation autour de leur axe longitudinal, perpendiculaire à la direction d'engagement de ladite cartouche C, permettent, en roulant autour dudit axe longitudinal, le glissement de ladite cartouche C.

La cartouche C s'engage donc aisément sur lesdits rouleaux 3 puis, lorsque la cartouche C n'est plus en contact avec le plateau ou tapis roulant 5, la cartouche C n'avance plus et se stabilise sur le plan de réception de la nacelle 1 constitué par les rouleaux 3.

La nacelle 1 comporte également des moyens d'entraînement en translation desdits rouleaux 3 de telle sorte que, lorsqu'une cartouche C est en place dans la nacelle 1, l'entraînement en translation des rouleaux 3 provoque la disparition du plan de réception de dessous la cartouche C provoquant sa libération petit à petit de manière à la déposer sur une surface de réception telle qu'une palette 6 ou sur une cartouche C' déjà empilée.

Les moyens d'entraînement en translation des rouleaux 3 sont constitués par des courroies 7 (représentées en pointillés) auxquelles sont liées les extrémités des rouleaux 3, lesdites courroies 7 étant entraînées autour de poulies 8 placées à chaque sommet des parois latérales 2 de forme triangulaire.

Les moyens d'entraînement en translation peuvent également être constitués par des chaînes, utilisées de la manière décrite ci-dessus pour les courroies.

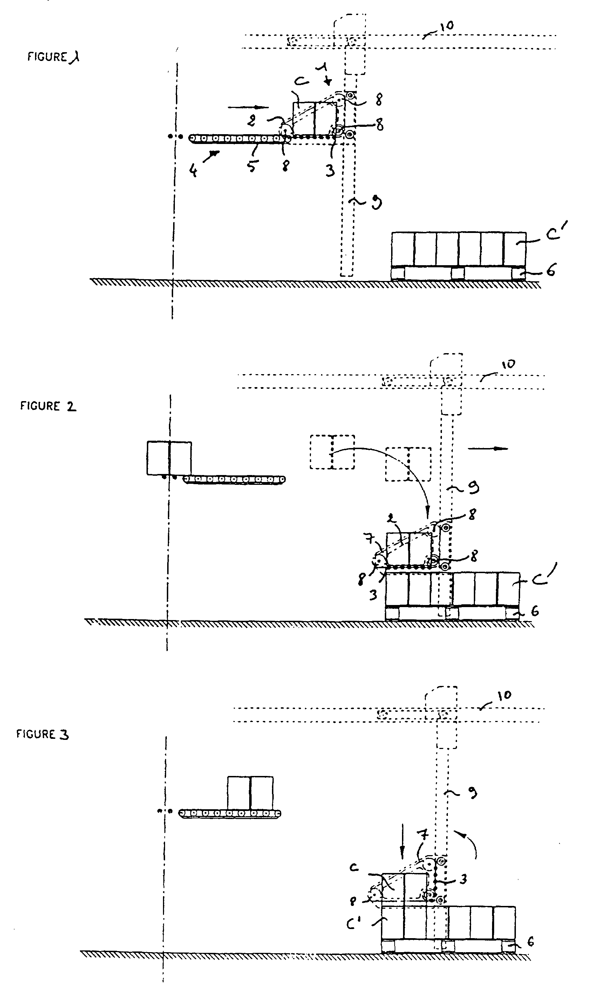

Ainsi qu'on peut le voir à la figure 3, l'entraînement des rouleaux 3 provoque la disparition du plan de réception qui s'étend sur une autre face de la nacelle et permet la libération du dessous de la cartouche C de manière à provoquer son dépôt.

La nacelle 1 peut être fixée à des moyens de déplacement connus en soi. Dans l'exemple de réalisation décrit, ces moyens sont constitués, de préférence, par un mât porteur 9 auquel la nacelle 1 est fixée par sa face arrière et le long duquel elle se déplace verticalement tandis que ledit mât 9, suspendu par exemple à une poutre 10, peut se déplacer le long de ladite poutre 10 afin d'emmener la nacelle 1 jusqu'au point d'empilement. Tous les moyens de convoyage de ce type, connus pour les déplacements en usines, sont utilisables.

## Revendications

1. Dispositif de palettisation de cartouches de cahiers empilés (C) comprenant des moyens de préhension d'une cartouche (C) permettant le transport et le dépôt de ladite cartouche (C), déplaçables depuis une station d'amenée (4) de la cartouche (C), constituée par l'extrémité d'un plateau de transport (5), jusqu'à une palette (6), des moyens de préhension, constitués par une nacelle (1) comportant des parois latérales entre lesquelles s'étend un plan de réception horizontal propre à permettre l'engagement par glissement de la cartouche (C) depuis l'extrémité du plateau de transport (5) de la station d'amenée (4) par la face avant de ladite nacelle (1), le plan de réception, formé de rouleaux, étant effaçable du dessous de la cartouche (C) de manière à permettre le dépôt de ladite cartouche (C) sur la palette (6), la nacelle (1) comportant des moyens d'entraînement en translation dudit plan le long des parois latérales vers la face arrière de ladite nacelle (1), lesdits moyens étant constitués par des courroies (7) auxquelles sont liées les extrémités des rouleaux (3), entraînées ces courroies (7) étant entraînées autour de poulies (8), caractérisé en ce que lesdites parois latérales sont de forme sensiblement triangulaire et en ce que lesdites poulies (8) sont placées à chaque sommet des parois latérales de forme triangulaire.

2. Dispositif selon la revendication 1,
caractérisé en ce que le plan de réception est constitué par une plage de rouleaux (3) adjacents et libres en rotation autour de leur axe longitudinal, lesdits rouleaux étant disposés entre les parois latérales (2) de la nacelle, de telle sorte que leur axe longitudinal est perpendiculaire à la direction d'amenée de la cartouche (C) sur ledit plan de réception.

3. Dispositif selon la revendication 2,
caractérisé en ce que les moyens d'entraînement en translation des rouleaux (3) sont constitués par des chaînes.

4. Dispositif selon l'une des revendications 1 à 3,
caractérisé en ce que la nacelle (1) est liée à des moyens de transport permettant le déplacement en translations verticale et horizontale de ladite nacelle (1) depuis la station d'amenée (4) jusqu'à la palette (6) et inversement.

5. Dispositif selon la revendication 4,
caractérisé en ce que lesdits moyens de transport sont constitués par un mât porteur (9) auquel la nacelle (1) est fixée par sa face arrière, opposée à la face d'entrée de la cartouche (C) et le long duquel elle se déplace verticalement tandis que ledit mât (9), suspendu à une poutre (10), peut se déplacer le long de ladite poutre (10) afin de convoyer la nacelle (1).

6. Dispositif selon l'une des revendications 1 à 5,
caractérisé en ce que ledit dispositif est commandé par une commande numérique.

## Claims

1. Device for placing bundles (B) of stacked books on pallets, comprising means for picking a bundle (B), enabling the transport and the deposition of the said bundle (B), which means are movable from a feed station (4) for the bundle (B), comprising the end of a transport table (5), to a pallet (6), the picking means comprising a cradle (1) having side walls, between which a horizontal receiving surface extends, which surface is suitable for enabling engagement, by sliding, of the bundle (B) from the end of the transport table (5) of the feed station (4) by the front face of the said cradle (1), the receiving surface, consisting of rollers, capable of being withdrawn from below the bundle (B) so as to allow the deposition of the said bundle (B) on the pallet (6), the cradle (1) comprising means for translational driving of the said surface along the side walls towards the rear face of the said cradle (1), the said means being made up of driven belts (7) to which the ends of the rollers (3) are connected, these belts (7) being driven around pulleys (8), characterised in that the said side walls are of essentially triangular shape and in that the said pulleys (8) are positioned at the top of each side wall of triangular shape.

2. Device according to Claim 1,
characterised in that the receiving surface consists of a range of adjacent rollers (3) that have freedom of rotation about their longitudinal axes, the said rollers being arranged between the side walls (2) of the cradle in such a way that their longitudinal axes are perpendicular to the direction in which the bundle (B) is fed onto the said receiving surface.

3. Device according to Claim 2,
characterised in that the means for translational driving of the rollers (3) consist of chains.

4. Device according to one of Claims 1 to 3,
characterised in that the cradle (1) is connected to transport means enabling vertical and horizontal translational movement of the said cradle (1) from the feed station (4) to the pallet (6) and vice versa.

5. Device according to Claim 4,
characterised in that the said transport means consist of a supporting pole (9) to which the cradle (1) is fixed by its rear face, opposite the entrance face for the bundle (B), and along which it moves vertically, whilst the said pole (9), suspended from a beam (10), is able to move along the said beam (10) in order to transport the cradle (1).

6. Device according to one of Claims 1 to 5,
characterised in-that the said device is controlled by digital control.

## Patentansprüche

1. Vorrichtung zum Palettieren von Kartuschen (C) für gestapelte Lagen, mit Mitteln zum Greifen einer Kartusche (C), die den Transport und das Ablegen der Kartusche (C) ermöglichen, wobei die Mittel zwischen einer durch das Ende einer Transporteinrichtung (5) gebildeten Zuführstation und einer Palette (6) beweglich sind, mit Mitteln zum Greifen, die durch eine Aufnahmeeinrichtung (1) gebildet sind, die seitliche Wandungen aufweist, zwischen denen sich eine horizontale Aufnahmeebene erstreckt, die geeignet ist, einen Gleiteingriff der Kartusche (C) zu ermöglichen von dem Ende der Transporteinrichtung (5) der Zuführstation (4) über die vordere Seite der genannten Aufnahmeeinrichtung (1), wobei die Aufnahmeebene, die durch Rollen gebildet ist, von der Unterseite der Kartusche außer Eingriff bringbar ist, um das Absetzen der Kartusche (C) auf die Palette (6) zu ermöglichen, wobei die Aufnahmeeinrichtung (1) Antriebsmittel zur Translation der genannten Ebene entlang der seitlichen Wandungen in Richtung auf die rückwärtige Fläche der genannten Aufnahmeeinrichtung (1) aufweist, wobei diese Mittel durch Riemen (7) gebildet sind, mit denen die Enden von angetriebenen Rollen (3) verbunden sind, wobei diese Riemen (7) um Treibrollen (8) herum angetrieben sind, dadurch gekennzeichnet, daß die seitlichen Wandungen eine im wesentlichen dreieckige Form haben und daß die Treibrollen (8) an jeder Spitze der dreieckförmigen seitlichen Wandungen angeordnet sind.

2. Vorrichtung nach Anspruch 1, dadurch gekennzeichnet, daß die Aufnahmeebene durch einen Bereich von Rollen (3) gebildet ist, die nebeneinander angeordnet sind und um ihre Längsachse drehbar sind, wobei die Rollen zwischen den seitlichen Wandungen (2) der Aufnahmeeinrichtung angeordnet sind, derart, daß ihre Längsachse senkrecht zur Zuführeinrichtung der Kartusche (C) auf die Aufnahmefläche ist.

3. Vorrichtung nach Anspruch 2, dadurch gekennzeichnet, daß die Antriebsmittel zur Translation der Rollen (3) durch Ketten gebildet sind.

4. Vorrichtung nach einem der Ansprüche 1 bis 3, dadurch gekennzeichnet, daß die Aufnahmeeinrichtung (1) mit Transportmitteln verbunden ist, die vertikale und horizontale Translations-Bewegungen der Aufnahmeeinrichtung zwischen der Zuführstation (4) und der Palette (6) und umgekehrt ermöglichen.

5. Vorrichtung nach Anspruch 4, dadurch gekennzeichnet, daß die Transportmittel durch einen Trägermast (9) gebildet sind, an dem die Aufnahmeeinrichtung (1) mit ihrer rückwärtigen Seite befestigt ist, die der Eintrittsseite der Kartusche (C) gegenüberliegt, und entlang dessen sie sich vertikal bewegen kann, während der Mast (9), der an einem Träger (10) aufgehängt ist, sich entlang des genannten Trägers (10) bewegen kann, um die Aufnahmeeinrichtung (1) zu befördern.

6. Vorrichtung nach einem der Ansprüche 1 bis 5, dadurch gekennzeichnet, daß die genannte Vorrichtung durch eine numerische Steuerung gesteuert wird.
